# EUROPEAN PATENT SPECIFICATION

(11) **EP 3 151 661 B1**
(45) Date of publication and mention of the grant of the patent: **15.03.2023**
(21) Application number: 15735624.7
(22) Date of filing: 02.06.2015
(51) Int. Cl.: A01M 23/24, A01M 1/02, A01M 23/00

(54) **PEST CONTROL DEVICE WITH COMMUNICATION MEANS**
SCHÄDLINGSKONTROLLVORRICHTUNG MIT KOMMUNIKATIONSMITTELN
DISPOSITIF DE CONTROL DES RAVAGEURS AVEC UN MOYEN DE COMMUNICATION

(30) Priority: 03.06.2014 DK 201470322
(43) Date of publication of application: 12.04.2017
(73) Proprietor: Anticimex Innovation Center A/S, 3200 Helsinge (DK)
(72) Inventor: FRITZBØGER, Preben, 3250 Gilleleje (DK)
(74) Representative: Zacco Denmark A/S
(86) International application number: PCT/DK2015/050140
(87) International publication number: WO 2015/185063

(56) References cited:
- EP-A1- 2 710 891
- WO-A1-2007/026123
- WO-A1-2010/030346

## Description

The present invention relates to a trap or a bait box for pest control comprising a monitoring unit, wherein the monitoring device is configured for battery power supply and for being in wireless communication with other units in a data network, comprising a sensor for detecting an event in the trap and for emitting a sensor signal. There is further provided a method of monitoring traps for pest control.

### Introductory part

In the following, the term "pests" comprises eg rats, mice, ferrets, mink, and moles and rodents in general as well as insects such as eg cockroaches and grasshoppers.

Rats on surface areas or in the sewage system are an ever increasing problem that entails considerable problems of a technical as well as a sanitary nature. For instance, rats may cause damage by perforating sewer pipes or building nests in the soil surrounding the pipes. Thereby the pipes may subside and become leaky; however, they may also become blocked due to actual rat nests, or the pipes may even cave in when the surrounding soil yields to sometimes very large rat nests. Thereby sewer liquid seeps into the surroundings with ensuing increased risks of spreading of diseases. Besides, rats are inherently also spreaders of disease and, since they are capable of wandering across considerable distances, they are regrettably a substantial source of propagation of diseases. It is therefore important - not only from a health perspective, but also from a financial perspective - to eradicate rats in general, also including in the sewage system.

However, it often happens that rats flee from the sewage system and move across surface areas. There they will seek hiding and consequently they often move along the base of external walls and the like. So-called surface traps are consequently often deployed along external walls.

Attempts have therefore been made, by both mechanical and chemical measures, to get rid of rats, but both approaches have deficiencies and weaknesses. For instance, rats possess a very high degree of adaptability which is also reflected in a unique ability to develop resistance to the poisons used; which is why it has been necessary to continuously develop and use increasingly aggressiver poisons that are poisonous not only to humans, but also to many of our useful animals that are thereby unintentionally exposed to a serious risk of being poisoned.

### Prior art

US2008/0092431 teaches a rat trap for mounting below the ground surface, eg in a sewer or a shaft. The trap has electronic means for registering and storing information pertaining to operational parameters, such as eg the battery state of the trap or its available memory. By the electronic memory, a clear indication is obtained of whether the trap is active and hence kills many rats or whether the trap is inactive. In particular information on inactivity may be a very useful indicator that something is wrong, and that consequently it may be necessary to check on the mechanical state of the trap. It may also be the case that, quite simply, the trap should be moved since the information indicates that no rats appear to be in the vicinity of the trap. The trap may comprise electronic means for wireless transmission of operational parameters to a receiver unit eg at ground level. By transmitting the operational parameters to ground level, the unit need not be inspected or picked up manually, and consequently the need for sending staff down into the sewage system is reduced. The trap may also comprise electronic means for transmitting operational parameters to a network such as eg a mobile network to the effect that the rat trap can be monitored from afar, eg via the internet. By providing the trap with such means, more traps can be monitored centrally, meaning that there are not only savings on staff, but it is also enabled to obtain improved number processing of information, such as eg instantaneous information on the amount of rats in given geographical zones. In some situations, one would also provide the trap with light and/or a camera and hence obtain an additional option for collecting information. The wireless communication via the mobile network as such is readily established eg by means of a small antenna at ground level which is connected by a cable to the trap.

US 2011/109460 (LLOYD ET AL.**)** relates to a system for managing traps for pest control wherein wireless communication and GPS are used for determining the location of traps. However, US 2011/109460 (LLOYD ET AL.) does not disclose: a sleep/dwell mode in which power consumption is low; that the central control unit synchronises the decentralised units by broadcast transmission of a sleep signal; and that some of the traps are capable of functioning as intermediate stations for transmissions from eg remote traps within reserved time intervals.

US 2009/193707 (MORAN**)** relates to a system for monitoring traps in a wireless communications network. The traps are powered by battery and the traps are capable of sending a message to a central unit with an indication of the battery voltage with a view to determining an efficient maintenance schedule. The traps may also emit a so-called "heart beat" signal to indicate that they work. It also describes a registration mode.

Several circumstances are described in respect of power savings and extension of battery lifetime, ia a "wake-up" signal for waking up a unit from a sleep mode. In particular, it is described that each unit may have a timer that runs during the sleep mode and wakes up the unit regularly to check the state of the trap. However, US 2009/193707 (MORAN) does not describe that any of the traps are capable of serving as intermediate stations for transmissions from eg remote traps in reserved time intervals.

WO 2010/030346 (DOW AGROSCIENCES) also relates to a system for monitoring traps in a wireless network. In particular, a "relay" functionality is described where some of the traps may serve as intermediate stations for transmissions from others. Also a "gateway" is described for communication via a data network, eg LAN.

The traps taught in WO 2010/030346 (DOW AGROSCIENCES) are also powered by battery and contain power management circuitry. It is descried that the traps communicate only periodically, eg six times a day, and that they have a sleep mode.

US 2003/184443 /GARDNER) relates substantially to a sensor for a trap.

EP 2 710 891 (WOODSTREAM) relates to a trap with a radio transmitter to enable it to participate in a MESH network where the traps may serve as repeaters such that, if a trap loses radio connection with a base station, the trap may transmit to the base station via another trap.

US 2004/093190 (BEROZA ET AL.) relates to a system for remotely monitoring traps.

However, battery lifetime remains a problem with the above systems/traps, and it is due to them using energy during periods when they merely await the expiry of a pre-set time limit as set forth in an integrated timer before the traps enter a sleep mode.

By the invention it is realised that the wake mode can be reduced considerably by the traps being capable of being forced into a sleep mode when they receive a sleep signal.

None of the disclosures describes how a new monitoring unit can be installed in the system and how eg a last-but-one installed unit can act as repeater for the most recently installed one and so forth. Nor do the disclosures describe how an initiated registration process keeps units awake when an operator has eg put the central unit in registration mode.

### Brief description of the invention

There is provided a device, more specifically a trap or a bait box, comprising a monitoring unit for being mounted in the device for pest control, wherein the monitoring unit is configured for being battery-powered and for wireless communication with other units in a data network, wherein the data network is a MESH network; comprising: a sensor for detecting an event in the device for pest control and for emitting a sensor signal; a radio transceiver; and a control unit configured for executing, via the radio transceiver, wireless communication comprising for transmitting a report with information from the sensor signal and for functioning as repeater; wherein the control unit is further configured for: executing the communication within a normal mode with a nominal power consumption; subsequently for putting the device, comprising the radio transceiver, in a sleep mode in which communication via the data network is suspended, and, following the course of a predetermined time interval running during the sleep mode, setting the device back to the normal mode, wherein the sleep mode has a power consumption which is intentionally lower that the nominal power consumption; and wherein the control unit has a timer and, in the normal mode, starts its timer when receiving, via the radio transceiver, a predetermined sleep signal and puts the apparatus in its sleep mode in which the timer continues to run until expiry of the timer when the apparatus wakes up to its normal mode and the radio transceiver is again activated such that reliable and continuous wirelesss reporting from the trap or bait box is ensured.

Thereby an on average low power consumption is ensured which enables long-term operation on battery supply. It makes it practically possible to install the device for pest control, such as a trap, in places where it would be, in practice, unacceptable to power the apparatus via a cable connection, eg to the common electrical network while simultaneously ensuring a reliable and continuous reporting from the trap.

Such places may comprise remote locations in large areas, eg industrial/production areas where cable connections are disproportionately expensive. Moreover, cable connections with power supply may, in some contexts, constitute a safety hazard caused by cable defects induced by eg pests.

In the context of traps for pest control, it is desired, on the one hand, to achieve the longest possible service intervals between eg battery change or battery recharging to reduce costs. On the other hand there is a need, when using traps, and in many countries a legal requirement, for quick removal of the animal that was caught in the trap. This can be ensured by the individual trap having long service intervals for eg battery change/charge and by the individual trap being capable of reporting, with comparatively short delay, if something has happened in the trap, eg by an animal caught in the trap being detected via the sensor. Such solution is very attractive in the market and solves major practical problems in connection with trap installations with a large amount of traps eg in hospital areas. Also in case of poison-based pest devices, there is a need for or a requirement for quick removal of pests from the device or comparatively frequent controls.

Device for pest control may partake in a network of decentralised devices that wirelessly send data packages to a central unit directly or indirectly by using other ones of the decentralised apparatuses as intermediate stations. Such networks are known as eg the so-called MESH networks. They are often preferred since they are capable of ensuring, to a higher degree, communication with the most remote apparatuses in the network despite interruption of some of the network paths in the network, eg in case of temporary closing of metal doors or when other signal-disturbing circumstances occur.

The wireless communication with other units, eg traps, in the data network takes place in accordance with a network protocol, which may be a MESH network protocol or another open or proprietary protocol. The control unit is therefore configured to implement the network protocol for executing the transmission and repeater functionalities.

In some embodiments, the control unit is provided with an identification code which is unique in the network that the trap is part of and configured with a timer. During the period when the control unit is in its normal mode, it transmits its report during a time interval whose start is determined by the identification code and sets the radio transceiver to act as repeater. Via the network protocol, the control unit ensures that dispatch of the report is not interrupted by its repeater function, eg by using mutually non-overlapping respective time intervals. A radio transceiver has a receiver circuit and a transmitter circuit. The circuits can be integrated with each other or can be separate circuits. They will often share the same antenna. When the radio transceiver acts as repeater, it will often use the transmitter and receiver circuits alternatingly. When the radio transceiver dispatches the report, there is a need for the transmitter circuit. In some embodiments, the receiver circuit is used in a unit for listening in on ongoing transmissions, if any, from other units before the unit itself starts its transmission by the transmitter circuit.

The monitoring unit may be built integrally into a trap to the effect that it constitutes, along with the trap, a trap that can be activated to be in wireless communication with other apparatuses in a data network. Alternatively, the monitoring unit can be made as a building-on or a building-in unit that is configured for being directly compatible with an existing trap or compatible upon modification of the existing trap.

The radio transmitter is configured for converting a signal from the control unit, typically a digital signal, to an airborne radio-wave signal via an antenna. The radio transmitter transmits and receives on one or more selected radio frequencies, eg frequency bands in the range around eg 433 MHz, 868 MHz, 2.4 GHz, 5 GHz, and/or 5.8 GHz.

In some embodiments, the sensor is a movement and/or a presence sensor, eg a so-called passive infrared, PIR, sensor. The sensor may also be a mechanically influenced contact/switch, a temperature sensor or another type of sensor. The sensor may emit an analog or digital signal to the control unit. The sensor is powered in some embodiments without being interrupted by the control unit in order to thereby ensure detection of an event when it occurs which, in some cases, may be a prerequisite for detection. In other embodiments, the power supply to the sensor is interrupted or reduced, optionally via a particular command to the sensor during those periods when the trap is in its sleep mode.

The report which is sent by the control unit can be transmitted as one or more data packages. The report comprises information from the sensor signal, eg by conversion of an analog or discrete multi-bit signal from the sensor to a signal that may have two levels and which indicates whether or not an event has occurred in the trap. The report may also comprise a discrete value that indicates a battery supply state, eg in the form of an expected remaining time when the battery in the trap may have lower, sufficient power consumption.

During the normal mode, the power consumption will typically vary dramatically depending on whether the control unit is sending a report or whether it is in the process of transmitting signals on as repeater or whether there is a pause in the transmissions. The nominal power consumption may therefore be defined under given preconditions, eg the precondition that the circuits are on and fully operational, but that no transmission or receipt with the transceiver is going on. The nominal power consumption may also be defined under the precondition that the circuits are on and fully operational and that transmission is going on. In the latter situation, the nominal power consumption may be defined as an average value.

In the sleep mode, the power consumption may also vary, but on an average level which is lower than the normal mode. This is ensured by the control unit reducing or interrupting the power supply to the radio transceiver during the sleep period. In some embodiments, it suffices to reduce or interrupt the power supply to the radio transmitter and allow the control unit to continue in an uninterrupted normal mode. In other embodiments, certain parts of the control unit enter into a sleep mode while other parts ensure that the sleep mode is interrupted after a predetermined time period. In some embodiments, the radio transceiver is put in its sleep mode via a particular command. By activation of the radio transceiver is to be understood that it is woken from its sleep mode, and by deactivation of the radio transceiver is to be understood that it is put in its sleep mode.

The sleep mode may also be designated by different terms, eg as a dwell mode, stand-by mode or a so-called low-power mode.

By battery supply is to be understood that the monitoring unit is provided with and electrically connected to battery elements, and/or that the monitoring unit is provided with terminals and/or wired connection to establish electrical connection to one or more battery elements. The battery power supply may comprise a so-called battery package, where several battery elements are integrated in one physical unit.

In some embodiments, the control unit is implemented as a microprocessor, eg a so-called single-chip processor which, in a single integrated semiconductor circuit, comprises interfaces for analog and/or digital signals, eg to /from the sensor and to/from the radio transceiver; memory circuit; calculation circuit, and one or more timers, eg so-called watch dog timers.

The duration of the normal mode can be controlled to be variable from the one normal mode to the subsequent one, or it may be determined in advance, but it is typically variable. The duration of the sleep mode may also be variable from the one normal mode to the subsequent one, or it may be determined in advance, but typically it is determined. The duration of the wake mode, typically the normal mode, is selected in response to the number of traps in the network and can be eg 5 to 60 seconds, but may be up to minutes, eg 1 to 5 minutes or other duration. By manual servicing of the traps, eg in case of depletion or change of battery in one or more traps or installation of traps in a system, the duration of the wake mode may be extended until it is ended manually.

The timer and auxiliary circuits, if any, may continue to run during the sleep mode with an ensuing exclusively very limited power consumption. In systems with several traps that are also periodically set to a sleep mode, respective timers in the traps can be programmed to expire after the same time interval, whereby the traps are synchronized to wake up from the sleep mode after the same time interval, whereby the traps are synchronized to wake up from the sleep mode at the same time. Moreover, the respective timers are started by receipt of the same sleep signal which ensures that the traps are in their wake normal mode for as long as it is necessary.

In some embodiments, the control unit has a further timer that controls the duration of the normal mode and which is synchronised with the former timer. Synchronisation may occur eg by the timers being started at the same time and having different expiry times, or by starting the other one, when the first one expires, and vice versa.

The duration of the sleep mode can be selected to be such that a good compromise is accomplished between battery longevity and sufficiently frequent reporting from the traps. The duration may be selectable to be eg 6, 12, or 24 hours or some other duration. A further, but important criterion may also be that the delay from when an operator (via a central unit) wishes to bring several monitoring units to their wake normal mode to them awakening by themselves from the sleep mode may not be too long. In that case, the duration may be selected to be eg 10, 15, 30, or 45 minutes or be 1 or 2 hours or some other duration.

In some embodiments, the monitoring unit has a registration mode that can be activated by a user, and wherein the control unit periodically sends, in the registration mode, its identification code repeatedly until it receives an acknowledge signal.

Thereby a new monitoring unit and hence a new trap can be deployed and partake in an existing network of traps by a simple registration process. In some embodiments, the registration mode is started by a predetermined type of user activation, eg an ongoing activation of a key which, at the beginning, emits a first light signal (eg a flashing green light) and which is replaced by a second light signal (eg a non-flashing green light) when the acknowledge signal has been received.

In some embodiments, the control unit has an output for emitting a firing signal to a trap mechanism, and the control unit is configured for emitting the firing signal at the moment when the sensor signal exceeds a predetermined criterion irrespective of whether the control unit is, at that moment, in the normal mode or in the sleep mode.

Thereby it is ensured that the trap catches and/or kills the pest at the moment when the pest enters the trap. The overall goal of keeping power consumption during the sleep mode lower than in the normal mode can still be accomplished.

In some embodiments, the control unit is configured for storing information that the sensor signal has exceeded the predefined criterion or that the firing signal has been emitted to enable information to be included in the next report to be sent by the control unit. If the control unit has just sent its report, but is still in its normal mode, the information can be stored during the remaining part of the normal mode, throughout the sleep mode and until it becomes the control unit's turn to send its report. The information can also be stored during the sleep mode.

A system may in addition to the device above comprise a unit for monitoring traps for pest control via radio communication over a data network; comprising: a radio transceiver; and a central control unit configured for communicating with several decentralised units via a direct connection or via one or more intermediate stations; and for keeping a central register of registered decentralised units; wherein the communication with the registered decentralised units takes place, to the widest extent possible, in a first repeated mode of a first time duration which is adapted to be such that sequential communication with the units can, to the widest extent possible, be performed unit by unit, and wherein the first mode is ended with a predetermined pause between the repetitions; and wherein the central control unit synchronizes the decentralised units by broadcast transmission of a sleep signal which, timewise, occurs as the ending of each of the repeated modes.

The first duration being adapted to be such that sequential communication with the units is, to the widest extent possible, carried out unit by unit, and that the central control unit synchronizes the decentralised units by broadcast transmission of a sleep signal, it is ensured, on the one hand, that flexibility of the duration of the first mode is accomplished, eg by registration of further decentralised units or needs for retransmissions, and, on the other hand, that all registered decentralised units are synchronized periodically to the centrally emitted sleep signal. The latter is important to ensure an optimal exploitation of and the longest possible battery life time of the decentralized units in the data network, while they are not in their sleep mode and hence use comparatively much power.

The duration of the first mode is selected to depend on the number of traps in the network and may be eg 5 to 60 seconds, but may be as long as minutes, eg 1 to 5 minutes or other duration. The duration of the first mode may depend on a predefined criterion, eg that a transmission time has elapsed for each unit registered, or that furthermore a retransmission period has elapsed and/or that a time-out time has been reached.

In some embodiments, the communication with the decentralised units comprises receipt of reports from or to the respective decentralised units, and wherein the central control unit is configured for comparing the received reports to a predefined criterion and trigger an alarm if the criterion has been exceeded.

The predefined criterion defines whether an alarm is to be triggered which, in some embodiments, comprises to signal to an operator that there has been detected an animal or other object in a trap indicated by its identification code. The reports may have several parameters and associated criteria, eg to emit alarms in case of low battery level, a mechanical/physical event in the trap or the like.

In some embodiments, the central control unit may signal different types of alarms depending on which parameter exceeds a criterion.

In some embodiments, the unit is configured with an operation interface for registering or deregistering a decentralised unit from the central register.

The operation interface may be configured eg with a key which, upon activation, puts the unit in a registration mode (a so-called link-mode), in which the unit, which is a central unit, awaits receipt, via the radio transceiver, of an identification code from a decentralised unit which is not already registered in the central unit. This waiting time may be put, timewise, immediately after the already registered, decentralised ones have transmitted their report, but before the unit emits the sleep signal.

As a confirmation that the registering of a decentralised unit has been successful, its identification code or other characteristic for the unit may be shown in the display which is a part of the operation interface.

An operator can end the registration mode by activating the key again or by activing another key.

The above-mentioned operation interface can be made very simple to operate to an operator. It has the major advantage that staff can quickly and efficiently operate the units and install a pest control system - following a brief training.

In some embodiments, the unit is configured with an internet connection for remote-controlling the central unit and/or reporting alarms.

An internet connection for remote-controlling the central unit and/or reporting alarms is used, in some embodiments, for further reducing the amount of manual operator work in connection with the servicing of pest control systems. Plural individual systems can be monitored at the same time, and the manual operator work in connection with the servicing of the individual traps where they are located can, to a higher degree, be planned.

Also, a system is provided for monitoring pest control devices via radio communication over a data network; comprising a central unit and a first decentralised unit and a second decentralised unit, wherein: the first and the second decentralised units are configured as set forth above; and the central unit is configured with: a radio transceiver which is compatible with the radio transceiver of the decentralised units; a central control unit receiving and/or sending reports sent from or to respective decentralised units via a direct connection or via one or more intermediate stations.

Such system can independently perform monitoring of a pest control system with plural traps distributed across an area. Aspects of the system are described above.

In some embodiments of the system, the central control unit keeps a register of units that are registered, and has a user-activatable registration mode in which it awaits a report sent from a decentralised unit that is not yet fully registered; wherein a decentralised unit has a registration mode; wherein the central unit executes a registration process that can be ended successfully or flawed in the communication with the decentralised unit that has been put into a registration mode; and wherein the decentralised unit emits a signal to a user with indication of error or success.

Thereby an operation interaction with the decentralised unit and the central unit can be obtained that is extremely simple to the user.

The signal emitted by the decentralised unit to a user indicating error or success can be shown on a display in that a decentralised unit that has been registered successfully is shown in a list of registered decentralised units on a display.

In some embodiments, the central unit has a key which, upon activation, starts a registration mode in the central unit, whereby the registration process is started, and the central unit awaits receipt via the radio transceiver of an identification code from a decentralised unit which is not already registered in the central unit. The decentralised unit is also, eg subsequently, put in a registration mode in which it makes itself known to the central unit eg by emitting its registration code. In its registration mode, the central unit will await that a decentralised unit makes itself known before a time-out signal, or before the registration mode is ended in some other way. If that is the case, the registration has been successful and otherwise not.

The registration process may comprise several steps in addition to a decentralised unit making itself known, and the central unit capturing its identification code: eg the central unit may send a signal of acknowledgement (acknowledge signal) or similar back to the decentralised unit. The process may also comprise setting of a clock in the decentralised unit or requesting further data from the decentralised unit.

In some embodiments of the system, the central unit ends the normal mode in the decentralised units by emitting a predetermined sleep signal when it has received reports from all registered, decentralised units or by a time-out.

Thereby the duration of the normal mode can be adapted dynamically to the number of registered decentralised units and to a need, if any, for a variable retransmission period. At the same time it is ensured that the decentralised units are regularly synchronised to enter, at substantially the same time, into their sleep mode. The decentralised units can thereby suspend or substantially reduce the power consumption in most of or in the most power-consuming ones of their electrical circuits. During the sleep mode, there will merely be a need for providing power to a timer circuit, eg a so-called sleep-dog-timer that can wake up the decentralised unit to a subsequent normal mode.

This solution has been found to provide a high degree of stability in the communication with the decentralised units while simultaneously a long battery operation time is accomplished between changes of battery or recharging.

In some embodiments, the central unit is configured for detecting the event that a user ends the registration mode and using that as a signal to end the normal mode in the decentralised units by emitting a predetermined sleep signal. Thereby the decentralised units are put in their sleep mode immediately after the registration process has been ended.

There is also provided a method of monitoring devices for pest control via radio communication over a data network, wherein the data network is a MESH network; wherein a central unit is included and several decentralised units installed in respective devices for pest control in the data network, comprising:
- registering an event in a trap with a sensor and generating a report that contains information about the event;
- synchronising periodical deactivation of the decentralised units to the effect that they are, approximately simultaneously, put in a sleep mode with comparatively low power consumption from a normal mode with a comparatively high power consumption;
- setting a decentralised unit, in the periodical normal mode, to act as repeater for signals from other decentralised units, and suspend the function as repeater in the sleep mode;
- executing a broadcast transmission of the report from a decentralised unit, wherein the broadcast transmission is executed during a reserved time interval, when the decentralised unit is in its normal mode.

Thereby it is ensured that the normal mode is interrupted by a sleep mode, a pause, in which the power consumption for a decentralised unit is reduced. This may significantly prolong the battery lifetime for a unit and lead to longer service intervals.

At the same time it is ensured that it is possible, at regular intervals, to communicate not only directly with a unit, but also indirectly from a unit via another one that acts as repeater. It is a major advantage where the method is used in trap systems having several traps distributed across a large area where there may temporarily - and in unpredicted ways - occur interruption of some wireless paths between some units.

Registering an event in a trap with a sensor may take place by means of a PIR sensor that is capable of detecting temperature changes caused eg by the presence of an animal that emits a certain body heat. The sensor may also be a temperature sensor, a visible-light sensor or a mechanical sensor.

The report generated may comprise a discrete multiple-bit measurement value registered by means of the sensor (eg an IR light intensity) or a binary measurement value that is generated directly by the sensor and which depends on whether a threshold value has been exceeded or not, or a coded value (eg an ascii string that indicates "animals present in trap" or "trap is empty") that has been generated by the control unit by conversion of a discrete multiple measurement bit registered by means of the sensor.

In some embodiments the method comprises:
- starting a timer that expires after a predetermined time interval; and
- activating the decentralised units to the effect that they wake up to the normal mode when the timer expires.

In some embodiments, the method comprises that the decentralised unit ends the normal mode by awaiting a sleep signal which, upon receipt, is used to instantaneously restart the timer and deactivate the decentralised unit to put it in the mode with comparatively low power consumption.

In some embodiments, the method comprises that the decentralised unit acts as repeater during most of the normal mode, except from a second time interval reserved for and/or when the broadcast transmission is executed.

In some embodiments, the method comprises determining the reserved time interval based on an identity code stored in the decentralised unit.

In some embodiments the method comprises:
- setting the central unit to a registration mode in which it, programming-wise, awaits receipt of communications signals with respective identity codes from the decentralised units.
- setting a decentralised unit to a link mode in which it, upon physical activation of a control element, starts transmission of a communications signal with an identity code;
- receiving the communications signal with the identity code and registering an element in a database corresponding to the identity code; and
- transmitting a shut-down communications signal from the central unit to the decentralised units.

Aspects of these steps are described in the above.

### List of figures

A more detailed description of the invention will be given below with reference to the figures, in which:
Figure 1a shows a box for pest control wherein a monitoring unit is installed;
Figure 1b shows a box for pest control with an integrated monitoring unit;
Figure 2 shows a mode diagram for a monitoring unit for a trap;
Figure 3 shows a mode diagram for a central unit;
Figure 4 shows a block diagram for a monitoring unit for a trap;
Figure 5 shows a block diagram for a central unit;
Figure 6a shows a first time course for communication between a central unit and several decentralised units; and
Figure 6b shows a second time course during which a registration process is going on.

### Detailed description

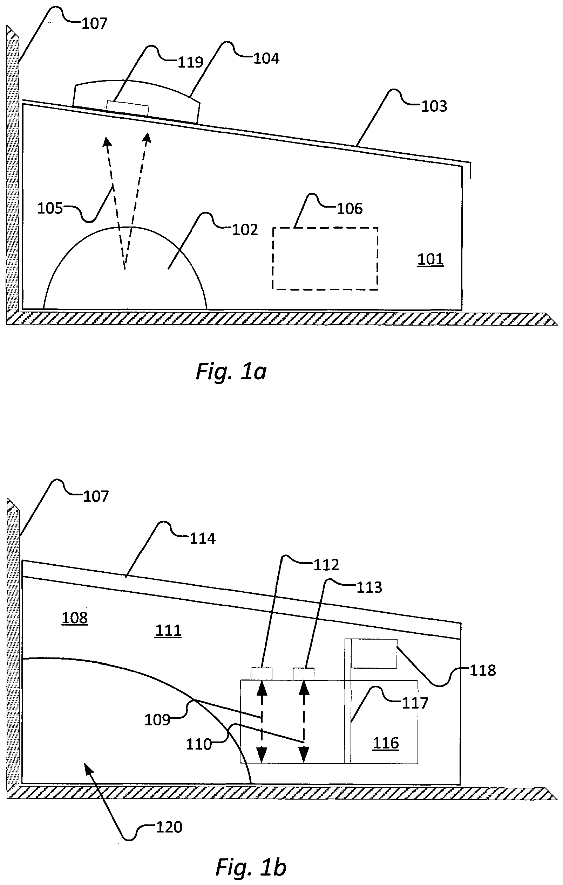

Figure 1a shows a box for pest control wherein a monitoring unit is installed. The box 101 is shown in a side view and comprises a lid 103 that protects the trap's interior against the weather and unwanted access. The box has an entrance 102 which is configured as an opening in the side of the box. Entrances may be provided in both sides of the box. The box is intended for horizontal deployment at a structure 107, eg on ground level at an external house wall. The box is made of metal and/or a hard plastics material.

As shown by 106, a trap, eg a clap trap and/or a bait box, is mounted or arranged inside the box which is intended for attracting pests.

A monitoring unit 104 is mounted on the outside of the lid 103 of the box. The monitoring unit is configured as an electronic circuit with an antenna (not shown) for wireless radio communication with other units, including a central unit, and having a sensor 119 that may be a so-called PIR sensor (Passive InfraRed). It is an advantage of a PIR sensor that it enables a relatively simple subsequent mounting of the monitoring unit 104 in an existing box for pest control. The monitoring unit is built integrally in a housing that may be made of a plastics material so that the radio communication can take place through the housing.

The sensor 119 is arranged on the bottom side of the monitoring unit 104, and the monitoring unit is mounted above a hole (not shown) in the lid 103 of the box so that the monitoring unit can receive infrared radiation 105 from a pest moving into the box 101 through the entrance 102.

Thereby the monitoring unit 104 can be subsequently mounted on existing boxes for pest control. The subsequent mounting can take place by a hole being drilled in the lid 103 of the box having such radius and location that the sensor can receive the infrared radiation. Secure mounting of the monitoring unit may comprise eg drilling of holes for mounting screws, rivets or the like that are capable of engaging with the housing of the monitoring unit.

The existing boxes being often made of metal and the monitoring unit being made from a plastics material and being mountable on the lid of the box, the monitoring unit may send and receive radio signals that are essentially not disturbed by the metal housing of the box.

In other embodiments, the sensor may be configured as an electrical switch with a mechanical device that is activated when a pest bumps into the device inside the box. Other sensors can also be used, eg an active, infrared sensor as described below can be used.

The monitoring unit can also be used in connection with other pest control devices. In the cases when the box is completely or partially made from a plastics material, it may be an option to mount the monitoring device inside the box.

Figure 1b shows a box for pest control with an integrated monitoring unit. The box 108 is shown in a side view and comprises a lid 114 that protects the trap interior against the weather and unwanted access. The box has an entrance 120 that is configured as a curve-shaped opening in the one side of the box.

Entrances may be located in both sides of the box. The box is intended for horizontal deployment on the ground surface at a structure as shown hatched by 107 or for vertical deployment on a horizontal surface where the shown vertical side becomes the lowermost horizontal face, and where the box is turned such that the entrance 120 continues to face towards a corner of the structure. The box may be deployed eg at the base of an external wall. The box 108 and/or the lid 114 may be configured from a hard plastics material or another material through which radio communication may take place.

Within the box a monitoring unit 111 is mounted and so is a trap, eg a clap trap 116, intended for attracting and killing pests. The trap 116 is tubular with its longitudinal axis in the horizontal direction when the box is deployed as shown and has an entrance most proximate the entrance 120 of the box. The trap has a device 117 which, upon release via the activation unit 118, can kill an animal present in the tubular trap 116 by a powerful and swinging movement of the device 117. Alternatively the device 117 can be configured as a striker mandrel. The device 118 may comprise a spring mechanism that is loaded by manual operation and that can be released in an electrically controllable manner from the control unit 11. In some embodiments both loading/charging and release of the device may be controlled and performed electrically.

The monitoring unit 111 comprises a first infrared sensor 112 and a second infrared sensor 113. Both sensors 112 and 113 comprise an infrared transmitter and an infrared receiver. The sensors are mounted on the trap 116 in such a manner that the first infrared sensor 112 establishes a radiation path for infrared light most proximate the trap's entrance, and the second infrared sensor establishes a remoter radiation path for infrared light where the radiation paths are arranged such that they are both interrupted when a pest is present so far inside the trap that the mechanism 117 is capable of killing the animal. Thereby it becomes possible to adapt the trap to release the activation unit 118 when there are sufficiently large animals present in the trap, but to prevent release of the trap when the animal is not far enough inside the trap for it to be efficiently killed or to prevent release of the trap when the animal is so small that only one of the two or more, if any, radiation paths is interrupted.

The activation unit 118 is thereby controlled in response to signals from the sensors 112 and 113 via the control unit 111. The control unit 111 is configured with a criterion for release of the activation unit.

The monitoring unit may also be used in connection with other pest control devices.

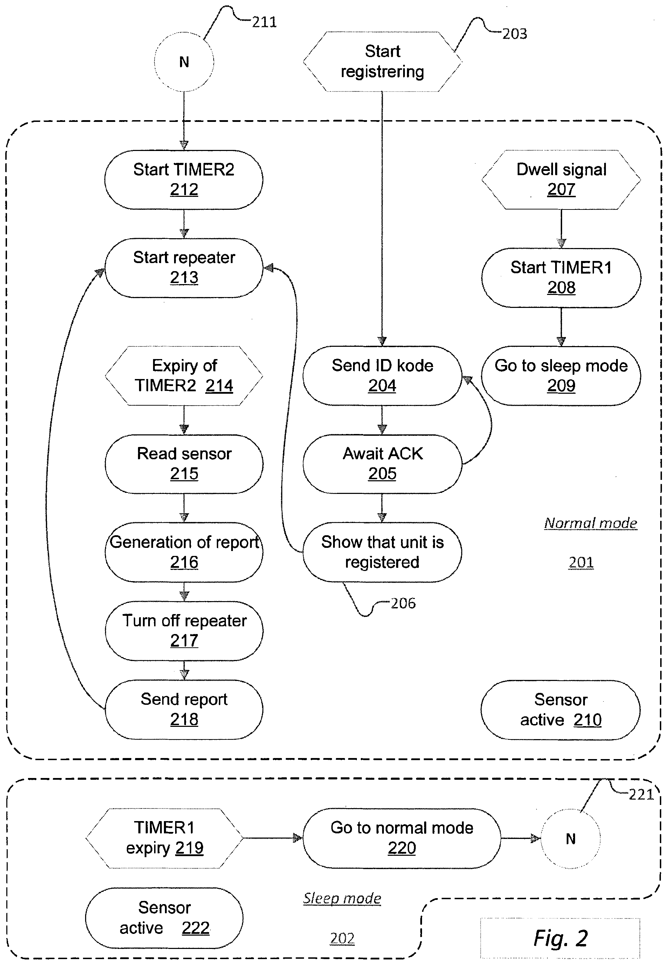

Figure 2 shows a mode diagram for a monitoring unit for a pest control device. As mentioned the monitoring unit has a normal mode 201 and a sleep mode 202.

A transition from the sleep mode 202 to the normal mode 201 is shown by a capital "N", 211. At the beginning of the normal mode 201, a timer "TIMER2" is started in the mode 212. Among several registered monitoring units TIMER2 controls when the individual monitoring unit may send its report. TIMER2 is set to expire after a time interval which is unique to the specific monitoring unit and generally at so large mutual difference in the duration of the time intervals that a monitoring unit is capable of ending its transmission before a subsequent unit begins to send. However, there may be exceptions as described below.

When TIMER2 has started, the repeater of the monitoring unit is activated in mode 213. Thereby the radio circuit of the monitoring unit is actuated and, as a starting point, the power consumption will increase. The monitoring unit may thereby receive reports from other monitoring units that are sent on directly. The send/receive function of the repeater may take place at shifted frequencies and/or during shifted time periods. In the latter case, the repeater can currently receive reports sent from other units and, immediately after a report is received, it may send that report on.

Alternatively the sequence of modes 212 and 213 may be reversed.

At a point in time, the event 214 occurs in that TIMER2 expires, and the monitoring unit enters mode 215 immediately after that when one or more of the monitoring unit's sensors is/are read. This may comprise reading of values that the monitoring unit has registered in its memory while in its sleep mode. Subsequently, the monitoring unit generates a report in mode 216. The report may comprise one or more of: the read values; converted values; a value that indicates a battery supply level; and the identification code of the monitoring unit.

Before the report is dispatched in mode 218, the repeater function of the monitoring unit is deactivated to the effect that it does not disturb transmission of the report. The deactivation may comprise shutting off a receiver circuit and/or deselecting or ignoring signals from the receiver circuit. Transmission of the report takes place via a transmitter circuit which may be a part of the repeater. When transmission of the report has ended, the monitoring unit reverts to its mode 213 in which the repeater is activated again. Alternatively, the mode 213 is selected when a predefined time interval reserved for dispatch of the report has elapsed.

At a point in time, the event 207 occurs in that the monitoring unit receives a sleep signal which is an instruction from a central unit that the monitoring unit must go to its sleep mode 202. When that event has occurred, a timer, TIMER1, is started in mode 208, following which the monitoring unit enters its sleep mode comprising turning off its radio circuits or substantially reducing the power consumption to same. In some embodiments, the power consumption is thereby reduced by 75 % to 90 %, in some embodiments by more than 90 %, eg about 95 %. In some embodiments, a power supply to the radio circuit is kept at a reduced level during the sleep mode, but one which is sufficient for ensuring a faster start-up time when the radio circuit is to go from its sleep mode to its normal mode.

TIMER1 controls the duration of the time interval when the monitoring unit is in its sleep mode 202 and is not in radio contact with a central unit. In order to ensure that the monitoring unit may serve as repeaters for one another, the duration of the sleep mode has been set to be such that at least some or all of the monitoring units have the same duration of the sleep mode.

TIMER1 thereby runs as one of few circuits during the sleep mode. TIMER1 is often designated a watch-dog timer.

At some point in time, the event 219 occurs in that TIMER1 expires. The sleep mode is thereby over and is ended in mode 220, following which the monitoring unit reverts to its normal mode 201 again via the transition 221 indicated by a capital "N".

During both the normal mode 201 and the sleep mode 202, the monitoring unit has a mode 210 in which the sensor is active and can register the presence of a pest. In some embodiments a trap can be fired in that mode if a criterion for triggering of the trap is exceeded.

When installing the monitoring unit in a system of several monitoring units, the monitoring unit can be brought, by an operator, to a registration mode via an event 203 such as eg mechanical activation of an electric contact or a switch on the unit. As a consequence of that event, the unit enters into a loop with modes 204 and 205 in which, one or more times, it dispatches its identification code in mode 204 and then awaits an acknowledge signal, ACK, from a central unit, following which it reverts to its mode 204 again and dispatches its identification code. When, at some point in time, in mode 205 the unit receives the acknowledge signal, ACK, from a central unit, the monitoring unit 206 will emit a first audio and/or visual signal to an operator that the monitoring unit is registered by the central unit. The acknowledge signal may contain a time code indicating which time period is reserved for dispatch of the report of the monitoring unit during the normal mode. That code is used by the monitoring unit to determine when TIMER2 expires.

However, if the acknowledge signal is not received within a predefined period of time, the unit will emit another audio and/or visual signal.

If receipt of the acknowledge signal is successful, the monitoring unit will then proceed to mode 213 in which it starts its repeater. In this way, it is possible, unit by unit, to deploy a chain of monitoring units at increasing distances from the central unit. A last-but-one deployed monitoring unit will thus serve as repeater for the most recently deployed one and so on.

The registration mode is ended by an operator manually operating the central unit to emit a sleep signal which is received and processed as described above.

As mentioned above, TIMER2 can control when the individual monitoring unit may send its report. In some embodiments, the unit starts to dispatch its report during the time which is reserved to it by means of the received time code and starts at expiry of TIMER2.

In some embodiments the monitoring unit has a mode in which it, immediately before it dispatches its report in mode 218, listens with its receiver to decide whether there is suitable transmission/radio silence in order for it to be able to uninterruptedly and without disturbing other units dispatch its report. If there is not suitable transmission/radio silence, the monitoring unit will postpone dispatch of its report until that occurs, or altogether omit to send its report during the current normal mode if it cannot be done within a predefined timeout interval. In some embodiments, it is allowed that the postponement of the dispatch of the report takes longer than the time slot reserved for the unit. Thereby it may occur that the dispatches by several units of respective reports are postponed with a corresponding listen-before-dispatch protocol.

As described below, the central unit will, however, not emit the sleep signal until it has received a report from all registered units or when a time-out interval has elapsed.

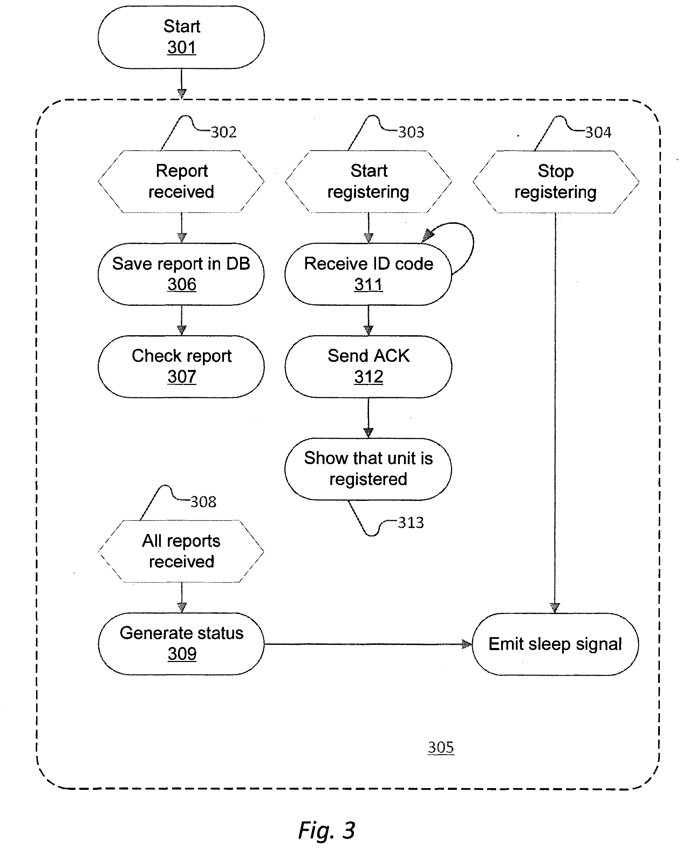

Figure 3 shows a mode diagram for a central unit. The central unit is started eg by coupling of current to the unit in mode 301, whereby it enters into an operative mode 305 and stays there for as long as the unit is supplied with power or until it is interrupted in another way. The central unit thereby stays in its operative mode while the decentralised units enter their sleep mode. The central unit substantially ensures receipt of reports from decentralised units, emission of the sleep signal and registration of decentralised units. In some embodiments, the central unit further allocates the above-mentioned time code indicating which period of time is reserved for dispatch of the report of a given monitoring unit during the normal mode. The allocation may take place wirelessly as a part of the registration via the radio circuit of the units.

In some embodiments, a decentralised unit determines its time code on the basis of its identification code. In some embodiments, a decentralised unit is allocated its time code by manual setting directly on the unit.

By installation of the central unit and one or more decentralised units or by expansion of a system with addition of more decentralised units, an operator can activate a registration process by detection of event 303, eg that a key is activated. Then the central unit will await receipt of an identification code from a decentralised unit. That may comprise validation of the identification code. Then a time code is selected which is sent as a part of or along with the acknowledge signal back to the decentralised unit. The decentralised unit, the monitoring unit, thereby has a mode in which it receives the time code and stores it in its memory and/or sets a timer with the time code with a view to being able to send its report during a reserved time period. The time code can be selected automatically by the central unit, eg by allocating to registered units a time code whereby they sequentially, one by one, dispatch their reports. Thereby the shortest possible duration of the normal period is ensured, other things being equal.

Then the central unit emits an audio and/or visual signal that indicates, eg on a graphic display, that the decentralised unit has become registered. The central unit will continue to await one or more identification codes until the registration process is interrupted manually by an operator, eg by pressing of a key, which is detected as an event 304.

Detection of the event 304 immediately after leads to the emission of the above-mentioned sleep signal in the mode 310 which gives rise to the flows described above in the decentralised units. The decentralised units, the monitoring units, are thereby brought to their sleep mode in a synchronised manner. Thereby the monitoring units may be in operation for a long time without losing their synchronisation with each other.

Usually, the central unit will remain active and be ready for receiving, in a periodical flow and in sequence, reports from the decentralised units during the allocated respective periods of time. A flow is started upon detection of the event 302 that comprises receipt of a report from the unit which is the first one in the sequence. The received report is stored in the mode 306 in a database or in some other kind of storage device for permanent or temporary storage of the reports. The event 302 will occur upon receipt of a report from a unit next in the sequence and so forth until all reports have been received. Following receipt of each report or following receipt of all reports from the registered units, a check of the reports is performed in the mode 307. Subsequently, a status report is generated as an end to the periodical flow. The status reports may also contain information on critical battery levels in identified units and identification of monitoring units for which, following several of the periodically occurring flows, no report has been received. The central unit may eg be configured with a criterion enabling the emission of an alarm in the situation when a report from a decentralised unit has not been received during a period of eg 24 hours.

If a pest has been detected in one or more traps, an alarm signal will be generated calling the attention to the fact that traps with respective identification codes need immediate attention.

The individual reports from the decentralised units and/or the status reports from the central unit, including alarm signals, can be made available via a data connection to a remote unit such as eg a personal computer or a mobile phone.

When all reports from the registered units have been received during one of the periodical flows, the event 308 is generated, and the above-referenced status report and/or alarms is/are generated in mode 309, following which the sleep signal is emitted in mode 310. In some embodiments, the sleep signal is emitted several times in a row. Thereby the likelihood that the sleep signal reaches decentralised units is increased. When the sleep signal is emitted repeatedly at suitably short intervals compared to the duration of the reserved periods of time, the thereby established timewise expanse of the sleep signals and hence partially missing or sliding synchronisation between the units can be tolerated.

On the background of the allocated periods of time and time codes, the central unit may also detect whether, within the period of time, it receives a report from a given unit. If that is not the case, it can be registered as a communication error that can be reported in the status report. On that background, an alarm signal can also be emitted if the communication error is detected for the same unit one or more times in succession.

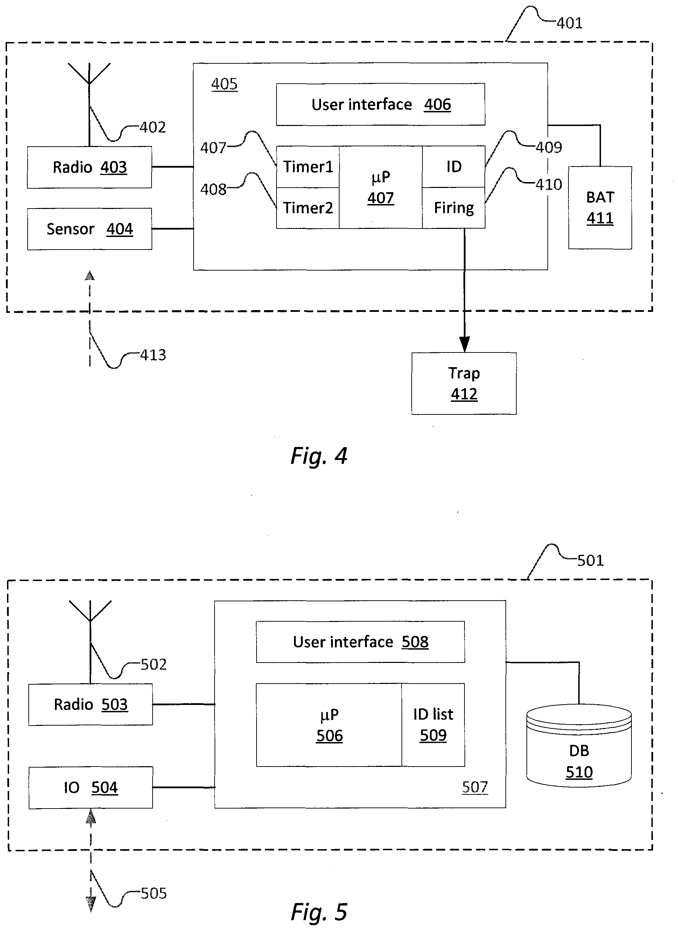

Figure 4 shows a block diagram for a monitoring unit for a trap. The monitoring unit 401 that partakes as a central unit as described above comprises a radio circuit 403 with an antenna 402, one or more sensors 404 for detection of signals 413, eg IR radiation, a battery supply 411 and a control unit 405. As shown, the monitoring unit may be connected to a trap 412, eg for a release mechanism in a trap.

The control unit 412 comprises a microprocessor 407, TIMER1 407, TIMER2 408, an identification code 409 and an output port 410 capable of emitting a firing signal to a trigger mechanism in the trap 412. It can be integrated in the same circuit eg a so-called single-chip processor. The control unit also comprises a user interface 406. In some embodiments, the user interface comprises one or more keys and one or more light-emitting diodes.

The control unit is configured, typically via programming, to run as described above in the context of figure 2.

Figure 5 shows a block diagram for a central unit. The central unit 501 that partakes as central unit as described above comprises a radio circuit 503 with an antenna 502, a communications port 504, and a database or other storage device 510.

The central unit 501 also comprises a user interface 508 comprising a display for showing identification codes or symbols for registered monitoring units, alarm signals and for displaying whether the central unit central unit is in a registration mode. Also, the display can show, optionally upon particular activation, a countdown for expiry of an ongoing time period when the decentralised units are in their sleep mode. Thereby an operator may receive an identification of how much time is left before the system is ready for being able to register further decentralised units.

The communications port may establish a communications path via a modem for mobile networks, eg via GSM, GPRS, EDGE or the like technologies via a cabled or wireless Ethernet connection or via some other kind of communication. In some embodiments, the central unit 501 has a webserver that provides access to selected ones or all data in the database 510.

The central unit is configured, typically via programming, to run as described above in the context of figure 3.

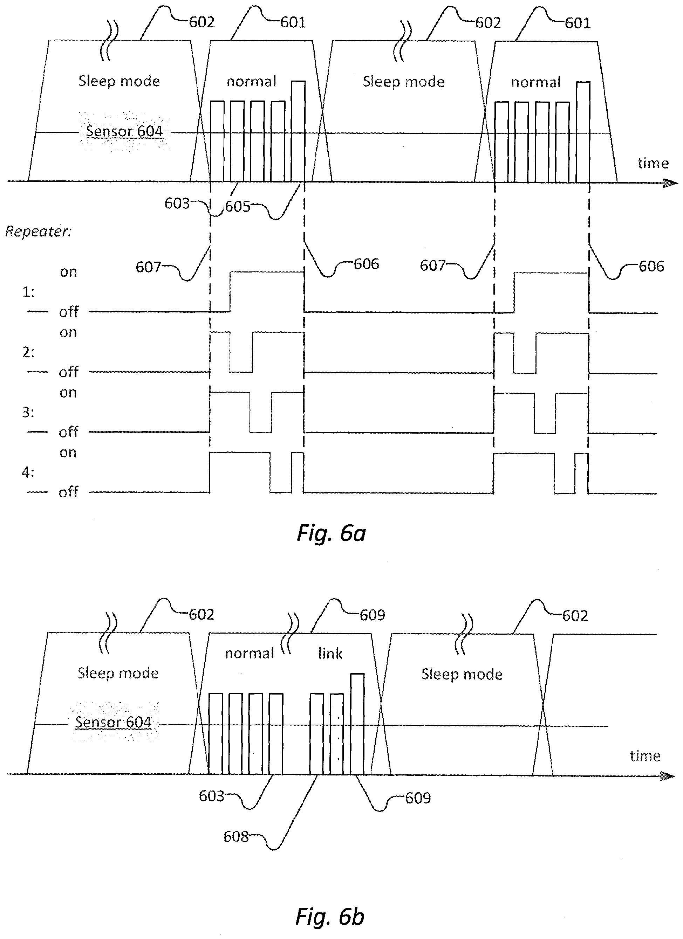

Figure 6a shows a first course of time for communication between a central unit and several decentralised units. At the top is shown, as a function of time, how the normal mode 601 occurs periodically between the inserted sleep modes 602 and how the respective time periods 603 for emitting respective reports from respective decentralised units are placed timewise. The time periods 603 are shown with a pause between them, but they could be placed such that the time periods are adjoining without pause between them. The duration of the time periods is adjusted to be such that a decentralised unit has sufficient time to dispatch its report. In the shown example there are four decentralised units, monitoring units, that emit for four consecutive time periods 603. Then the central unit can, as mentioned above, emit a sleep signal 605 that sends the decentralised units to their sleep mode. As shown, a short delay may occur from the emission of the sleep signal before the decentralised units have entered their sleep mode. Thereby the sleep signal synchronizes when the sleep modes are activated for the registered units and hence also, via the timer of the respective units, TIMER1, the activation of the normal mode.

At the bottom it is shown how the four decentralised units, as a function of time, act as repeaters for each other. That is shown by four curve flows for the respective decentralised units marked "1", "2", "3", and "4" as a function of time. Each curve changes between a level "on" where the repeater in a decentralised unit is activated or turned on and a level "off" where the repeater is deactivated or turned off.

The first decentralised unit "1" can send its report during the reserved period of time starting at the dotted line 607. Therefore its repeater is deactivated or turned off. During the same period of time, the repeaters of the other decentralised units "2", "3", and "4" are active. When the reserved period of time has elapsed, the repeater is activated in the central unit "1" until the time marked by the dotted line 606 when the sleep signal is received. In a corresponding manner the repeater in the decentralised unit "2" is active in the normal ode between times 607 and 606, apart from the time which is reserved for the decentralised unit "2" and so forth.

The above embodiment is a time-multiplex solution to the problem of avoiding interference or conflict between dispatch of the report of a decentralised unit and sending on of reports or other data traffic via the repeater of the unit.

In other embodiments, it can be allowed that the repeaters of the decentralised units remain active or turned on during the respective reserved periods of time for dispatch of the report.

As illustrated by 604, the sensor or the sensors operate(s) uninterruptedly in the decentralised units to register pests through the repeated sleep modes 602 and normal modes 601.

Figure 6b shows a second course of time when a registration process is in progress. In a corresponding manner it is shown, as a function of time, how the normal mode, referred to by 609, occurs periodically between the inserted sleep modes 602, and how the respective time periods 603 for emitting respective reports from respective decentralised units are located timewise.

In the shown scenario, an operator has put the central unit in registration mode as set forth above. In the first instance, the sleep signal 605 is therefore not emitted as described above. The central unit, however, awaits receipt of an identification code from a decentralised unit which is not already registered in the central unit. That receipt is shown for two "new" units in the system by 608. The new units will not send their identification codes until the point in time when an operator manually activates the new units one at a time. A rather long pause will therefore occur between the receipts from the "new" units compared to the receipts from the already registered units that automatically send their reports during the reserved periods of time.

When the last one of the "new" decentralised units of the system has been activated by the operator, the operator may revert to the central unit and end the registration process whereby the sleep signal 609 is emitted. Thus, in that case, the duration of the normal mode depends on how long time it takes for the operator to install the new units with the registration process.

In the shown scenario, two "new" units have been added to a system with four units that have already been registered.

The invention is not limited to the embodiments shown.

## Claims

1. A trap or a bait box (101, 106, 116, 412) for pest control comprising a monitoring unit (104, 111), wherein the monitoring unit (104, 111) is configured for being powered by battery (411) and for wireless communication with other units ("1", "2", "3", "4", 401, 501) in a data network, comprising:
a sensor (112, 113, 119, 404, 604) for detecting an event in the trap or bait box (106, 116, 412) for pest control and for emitting a sensor signal;
a radio transceiver (403); and
a control unit (11, 405) configured for executing, via the radio transceiver (403), wireless communication for transmitting a report with information from the sensor signal and for functioning as repeater;
wherein the control unit (11, 405) is further configured for:
executing the wireless communication within a normal mode (201, 602) with a nominal power consumption;
subsequently putting the trap or bait box (101, 106, 116, 412), comprising the radio transceiver (403), in a sleep mode (202, 602) in which the wireless communication via the data network is suspended, and,
following the course of a predetermined time interval running during the sleep mode (202, 602), setting the trap or a bait box (101, 106, 116, 412) back to the normal mode (201, 601),
wherein the sleep mode (202, 602) has a power consumption which is intentionally lower than the nominal power consumption;
**characterised in that**
the control unit (11, 405) has a timer and, in the normal mode (201, 601), starts its timer ("TIMER1") when receiving, via the radio transceiver (403), a predetermined sleep signal and puts the trap or bait box (101, 106, 116, 412) in its sleep mode (202, 602) in which the timer continues to run until expiry of the timer when the trap or bait box wake up to its normal mode and the radio transceiver (403) is again activated,
wherein the data network is a MESH network,
such that reliable and continuous wireless reporting from the trap or bait box is ensured.

2. The trap or a bait box (101, 106, 116, 412) according to claim 1, wherein the control unit (11, 405) has a registration mode (203, 303) that can be activated by a user, and wherein the control unit periodically sends, in the registration mode, its identification code (204, 311, 409) repeatedly until it receives an acknowledge signal (205, 312, ACK).

3. The trap or a bait box (101, 106, 116, 412) according to claims 1 - 2, wherein the control unit (11, 405) has an output for emitting a firing signal to a trap mechanism (117), and wherein the control unit is configured for emitting the firing signal at the moment when the sensor signal exceeds a predetermined criterion irrespective of whether the control unit is, at that moment, in the normal mode (201) or in the sleep mode (202).

4. A system for monitoring traps or bait boxes (101, 106, 116, 412) for pest control according to claims 1 to 3 via radio communication over a data network, wherein the data network is a MESH network: comprising a central unit ("1", 501) and a first decentralised unit ("2", 401) and a second decentralised unit ("3", "4", 401), wherein:
the first and the second decentralised units are configured as set forth in any one of claims 1 - 3; and
the central unit ("1", 501) is configured with:
- a radio transceiver (503) that is compatible with the radio transceiver (403) of the decentralised units ("2", "3", "4", 401);
- a central control unit (507) receiving and/or sending reports sent from or to respective decentralised units ("2", "3", "4", 401) via a direct connection or via one or more intermediate stations;
wherein the central control unit (507) ends a normal mode in the decentralised units ("2", "3", "4", 401) by emitting a predetermined sleep signal when it has received reports from all registered, decentralised units or by a time-out, such that all registered decentralised units are synchronized periodically to the centrally emitted sleep signal.

5. The system according to claim 4, wherein the central control unit (507)
keeps a register of units ("1", "2", "3", "4", 401, 501) that are registered; and has a user-activatable registration mode in which it awaits a report sent from a decentralised unit ("2", "3", "4", 401) that is not yet fully registered;
wherein a decentralised unit has a registration mode;
wherein the central unit (507) executes a registration process that can be ended successfully or flawed in the communication with the decentralised unit that has been put into a registration mode (203); and
wherein the decentralised unit emits a signal to a user with indication of error or success.

6. A method of monitoring traps or bait boxes (106, 116, 412) for pest control via radio communication over a data network, wherein the data network is a MESH network; wherein a central unit (507) is included and several decentralised units ("2", "3", "4", 401) installed in respective traps or bait boxes (101, 106, 116, 412) for pest control in the data network, comprising:
- registering an event in a trap or a bait box (106, 116, 412) with a sensor and generating a report that contains information about the event;
- synchronising periodical deactivation of the decentralised units ("2", "3", "4", 401) to the effect that they are, approximately simultaneously, put in a sleep mode (202, 602) with comparatively low power consumption from a normal mode (201, 601) with a comparatively high power consumption;
- setting a decentralised unit ("2", 401), in the periodical normal mode (201, 601), to act as repeater for signals from other decentralised units ("3", "4", 401), and suspend the function as repeater in the sleep mode (202, 602);
executing a broadcast transmission of the report from a decentralised unit ("2", 401), wherein the broadcast transmission is executed during a reserved time interval, when the decentralised unit is in its normal mode (201, 601).

7. A method according to claim 6, comprising
- starting a timer (TIMER1) that expires after a predetermined time interval; and
- activating the decentralised units ("2", "3", "4", 401) to the effect that they wake up to the normal mode (201, 601) when the timer expires.

8. The method according to claim 7, comprising that
- the decentralised unit ("2", "3", "4", 401) ends the normal mode (201, 601) when it receives a sleep signal which, upon receipt, is used to instantaneously restart the timer (TIMER1) and deactivate the decentralised unit to put it in the mode with comparatively low power consumption.

9. The method according to claims 7 - 8, wherein the decentralised unit ("2", "3", "4", 401) acts as repeater during most of the normal mode (201, 601), except from a second time interval reserved for and/or when the broadcast transmission is executed.

10. The method according to claims 7-9, comprising
- determining the reserved time interval based on an identity code stored in the decentralised unit ("2", "3", "4", 401).

11. The method according to claims 7 - 10, comprising
- setting the central unit (507) to a registration mode in which it, programming-wise, awaits receipt of communications signals with respective identity codes from the decentralised units ("2", "3", "4", 401);
- setting a decentralised unit ("2", "3", "4", 401) to a link mode in which it, upon physical activation of a control element, starts transmission of a communications signal with an identity code;
- receiving the communications signal with the identity code and registering an element in a database corresponding to the identity code; and
- transmitting a shut-down communications signal from the central unit (507) to the decentralised units ("2", "3", "4", 401).

## Patentansprüche

1. Falle oder Köderkasten (101, 106, 116, 412) für Schädlingsbekämpfung umfassend eine Überwachungseinheit (104, 111), wobei die Überwachungseinheit (104, 111) dafür ausgelegt ist, batteriebetrieben (411) zu sein und zur drahtlosen Kommunikation mit anderen Einheiten ("1", "2", "3", "4", 401, 501) in einem Datennetzwerk, umfassend:
einen Sensor (112, 113, 119, 404, 604) zur Erkennung eines Ereignisses in der Falle oder im Köderkasten (106, 116, 412) für Schädlingsbekämpfung und zum Aussenden eines Sensorsignals;
einen Funksendeempfänger (403); und
eine Steuereinheit (11, 405) ausgeführt zum Ausführen, über den Funksendeempfänger (403), einer drahtlosen Kommunikation zum Übertragen einer Meldung mit Information vom Sensorsignal und um als Wiederholer zu funktionieren;
wobei die Steuereinheit (11, 405) weiter für Folgendes ausgelegt ist:
Ausführen der drahtlosen Kommunikation in einem normalen Modus (201, 602) mit einem nominellen Leistungsverbrauch;
nachfolgendes Stellen der Falle oder des Köderkastens (101, 106, 116, 412), umfassend den Funksendeempfänger (403), in einen Ruhemodus (202, 602), worin die drahtlose Kommunikation über das Datennetzwerk aufgehoben ist, und,
nach dem Verlauf eines vordefinierten Zeitintervalls während des Ruhemodus (202, 602), Zurückstellen der Falle oder eines Köderkastens (101, 106, 116, 412) in den normalen Modus (201, 601),
wobei der Ruhemodus (202, 602) einen Leistungsverbrauch aufweist, der absichtlich niedriger ist als der nominelle Leistungsverbrauch;
**dadurch gekennzeichnet, dass**
die Steuereinheit (11, 405) einen Zeitgeber aufweist und im normalen Modus (201, 601) ihren Zeitgeber ("TIMER1") startet, wenn sie über den Funksendeempfänger (403) ein vordefiniertes Ruhesignal empfängt, und die Falle oder den Köderkasten (101, 106, 116, 412) in den Ruhemodus (202, 602) stellt, worin der Zeitgeber weiter läuft bis der Zeitgeber ausläuft, wenn die Falle oder der Köderkasten zum normalen Modus aufwacht, und der Funksendeempfänger (403) wieder aktiviert wird,
wobei das Datennetzwerk ein MESH-Netzwerk ist,
so dass zuverlässige und kontinuierliche drahtlose Meldungen von der Falle oder dem Köderkasten gewährleistet sind.

2. Falle oder Köderkasten (101, 106, 116, 412) nach Anspruch 1, wobei die Steuereinheit (11, 405) einen Registrierungsmodus (203, 303) aufweist, der durch einen Benutzer aktiviert werden kann, und wobei die Steuereinheit, im Registrierungsmodus, ihren Identifikationscode (204, 311, 409) wiederholt periodisch überträgt bis sie ein Bestätigungssignal (205, 312, ACK) empfängt.

3. Falle oder Köderkasten (101, 106, 116, 412) nach Anspruch 1 - 2, wobei die Steuereinheit (11, 405) einen Ausgang zum Aussenden eines Zündungssignals an einen Fallenmechanismus (117) aufweist, und wobei die Steuereinheit dafür ausgelegt ist, das Zündungssignal in dem Moment auszusenden, wenn das Sensorsignal ein vordefiniertes Kriterium überschreitet unabhängig davon, ob die Steuereinheit in dem Moment im normalen Modus (201) oder im Ruhemodus (202) ist.

4. System zur Überwachung von Fallen oder Köderkästen (101, 106, 116, 412) für Schädlingsbekämpfung nach Anspruch 1 bis 3 über Funkkommunikation über ein Datennetzwerk, wobei das Datennetzwerk ein MESH-Netzwerk ist: umfassend eine zentrale Einheit ("1", 501) und eine erste dezentrale Einheit ("2", 401) und eine zweite dezentrale Einheit ("3", "4", 401), wobei:
die erste und zweite dezentrale Einheit nach einem der Ansprüche 1 - 3 ausgelegt ist; und
die zentrale Einheit ("1", 501) mit Folgendem ausgelegt ist:
- einen Funksendeempfänger (503), der mit dem Funksendeempfänger (403) der dezentralen Einheiten ("2", "3", "4", 401) kompatibel ist;
- eine zentrale Steuereinheit (507), die Meldungen empfängt und/oder überträgt, die von oder an jeweilige dezentralen Einheiten ("2", "3", "4", 401) über eine direkte Verbindung oder über eine oder mehrere Zwischenstationen übertragen werden;
wobei die zentrale Steuereinheit (507) einen normalen Modus in den dezentralen Einheiten ("2", "3", "4", 401) durch Aussenden eines vordefinierten Ruhesignals beendet, wenn sie Meldungen von allen registrierten dezentralen Einheiten empfangen hat oder durch eine Unterbrechung, so dass alle registrierten dezentralen Einheiten mit dem zentral ausgesendeten Ruhesignal periodisch synchronisiert werden.

5. System nach Anspruch 4, wobei die zentrale Steuereinheit (507) ein Register von Einheiten ("1", "2", "3", "4", 401, 501)führt, die registriert sind; und einen durch den Benutzer aktivierbaren Registrierungsmodus aufweist, worin sie eine Meldung abwartet, die von einer dezentralen Einheit ("2", "3", "4", 401), die noch nicht vollständig registriert ist, übertragen wird;
wobei eine dezentrale Einheit einen Registrierungsmodus aufweist;
wobei die zentrale Einheit (507) einen Registrierungsvorgang ausführt, der in der Kommunikation mit der dezentralen Einheit, die in einen Registrierungsmodus (203) gestellt worden ist, erfolgreich oder fehlerhaft beendet werden kann; und
wobei die dezentrale Einheit ein Signal an einen Benutzer mit einer Fehlerangabe oder Erfolgsangabe aussendet.

6. Verfahren zur Überwachung von Fallen oder Köderkästen (106, 116, 412) für Schädlingsbekämpfung über Funkkommunikation über ein Datennetzwerk, wobei das Datennetzwerk ein MESH-Netzwerk ist; wobei eine zentrale Einheit (507) enthalten ist und mehrere dezentrale Einheiten ("2", "3", "4", 401) in jeweiligen Fallen oder Köderkästen (101, 106, 116, 412) für Schädlingsbekämpfung im Datennetzwerk installiert sind, umfassend:
- Registrieren eines Ereignisses in einer Falle oder eines Köderkastens (106, 116, 412) mit einem Sensor und Erzeugen einer Meldung, die Information über das Ereignis enthält;
- Synchronisierung einer periodischen Deaktivierung der dezentralen Einheiten ("2", "3", "4", 401) mit dem Ergebnis, dass sie ungefähr gleichzeitig in einen Ruhemodus (202, 602) gestellt werden mit einem vergleichsweise niedrigen Leistungsverbrauch von einem normalen Modus (201, 601) mit einem vergleichsweise hohen Leistungsverbrauch;
- Einstellen einer dezentralen Einheit ("2", 401), im periodischen normalen Modus (201, 601), zum Funktionieren als Wiederholer für Signale von anderen dezentralen Einheiten ("3", "4", 401) und Aufheben der Funktion als Wiederholer im Ruhemodus (202, 602);
Ausführen einer Übertragung der Meldung von einer dezentralen Einheit ("2", 401), wobei die Übertragung während eines reservierten Zeitintervalls ausgeführt wird, wenn die dezentrale Einheit in ihrem normalen Modus (201, 601) ist.

7. Verfahren nach Anspruch 6, umfassend
- Starten eines Zeitgebers (TIMER1), der nach einem vordefinierten Zeitintervall ausläuft; und
- Aktivieren der dezentralen Einheiten ("2", "3", "4", 401) mit dem Ergebnis, dass sie zum normalen Modus (201, 601) aufwachen, wenn der Zeitgeber ausläuft.

8. Verfahren nach Anspruch 7, umfassend dass
- die dezentrale Einheit ("2", "3", "4", 401) den normalen Modus (201, 601) beendet, wenn sie ein Ruhesignal empfängt, das, beim Empfang, dafür verwendet wird, um sofort den Zeitgeber (TIMER1) erneut zu starten und die dezentrale Einheit zu deaktivieren, um sie in den Modus mit dem vergleichsweise niedrigen Leistungsverbrauch zu stellen.

9. Verfahren nach Anspruch 7 - 8, wobei die dezentrale Einheit ("2", "3", "4", 401) als Wiederholer während eines Großteils des normalen Modus (201, 601) funktioniert, mit Ausnahme eines zweiten Zeitintervalls, das für und/oder wenn die Übertragung ausgeführt wird, reserviert ist.

10. Verfahren nach Anspruch 7 - 9, umfassend
- Ermitteln des reservierten Zeitintervalls basierend auf einem Identitätscode, der in der in der dezentralen Einheit ("2", "3", "4", 401) gespeichert ist.

11. Verfahren nach Anspruch 7 - 10, umfassend
- Einstellen der zentralen Einheit (507) auf einen Registrierungsmodus, worin sie programmierungsmäßig den Empfang von Kommunikationssignalen mit jeweiligen Identitätscodes von den dezentralen Einheiten ("2", "3", "4", 401) abwartet;
- Einstellen einer dezentralen Einheit ("2", "3", "4", 401) auf einen Verbindungsmodus, worin sie bei einer physischen Aktivierung eines Steuerelements die Übertragung eines Kommunikationssignals mit einem Identitätscode startet;
- Empfangen des Kommunikationssignals mit dem Identitätscode und Registrieren eines Elements in einer Datenbank entsprechend dem Identitätscode; und
- Übertragen eines Abschaltkommunikationssignals von der zentralen Einheit (507) an die dezentralen Einheiten ("2", "3", "4", 401).

## Revendications

1. Piège ou boîtier à appât (101, 106, 116, 412) pour la lutte contre les nuisibles, comprenant une unité de surveillance (104, 111), l'unité de surveillance (104, 111) étant configurée pour être alimentée par une batterie (411) et pour une communication sans fil avec d'autres unités ("1", "2", "3", "4", 401, 501) dans un réseau de données, comprenant :
un capteur (112, 113, 119, 404, 604) destiné à détecter un événement dans le piège ou boîtier à appât (106, 116, 412) pour la lutte contre les nuisibles et à émettre un signal de capteur ;
un émetteur-récepteur radioélectrique (403) ; et
une unité de commande (11, 405) configurée pour exécuter, via l'émetteur-récepteur radio (403), une communication sans fil pour transmettre un rapport avec des informations provenant du signal de capteur et pour fonctionner en tant que répéteur ;
dans lequel l'unité de commande (11, 405) est en outre configurée pour :
exécuter la communication dans un mode normal (201, 602) avec une consommation d'énergie nominale ;
ensuite, le piège ou le boîtier d'appât (101, 106, 116, 412), comprenant l'émetteur-récepteur radio (403), dans un mode de veille (202, 602) dans lequel la communication sans fil via le réseau de données est suspendue, et,
à la suite d'un intervalle de temps prédéterminé s'exécutant pendant le mode de veille (202, 602), remettre le piège ou boîtier à appât (101, 106, 116, 412) dans le mode normal (201, 601),
dans lequel le mode de veille (202, 602) présente une consommation d'énergie qui est intentionnellement inférieure à la consommation d'énergie nominale ;
**caractérisé en ce que**
l'unité de commande (11, 405) comporte un temporisateur et, dans le mode normal (201, 601), démarre son temporisateur ("TIMER1 ") lors de la réception, via l'émetteur-récepteur radio (403), d'un signal de veille prédéterminé et met le piège ou boîtier à appât (101, 106, 116, 412) dans son mode de veille (202, 602) dans lequel le temporisateur continue à fonctionner jusqu'à expiration du temporisateur lorsque le piège ou boîtier à appât se réveille jusqu'à son mode normal et l'émetteur-récepteur radio (403) est à nouveau activé,
dans lequel le réseau de données étant un réseau MESH,
si bien qu'un rapport sans fil fiable et continu à partir du piège ou du boîtier d'appât est assuré.

2. Piège ou boîtier à appât (101, 106, 116, 412) selon la revendication 1, dans laquelle l'unité de commande (11, 405) comporte un mode d'enregistrement (203, 303) qui peut être activé par un utilisateur, et dans lequel l'unité de commande envoie périodiquement, dans le mode d'enregistrement, son code d'identification (204, 311, 409) de manière répétée jusqu'à ce qu'il reçoive un signal d'accusé de réception (205, 312, ACK).

3. Piège ou boîtier à appât (101, 106, 116, 412) selon les revendications 1 à 2, l'unité de commande (11, 405) présente une sortie pour émettre un signal de mise à feu vers un mécanisme de piège (117), et dans lequel l'unité de commande est configurée pour émettre le signal de mise à feu au moment où le signal de capteur dépasse un critère prédéterminé indépendamment du fait que l'unité de commande soit, à ce moment, dans le mode normal (201) ou dans le mode de veille (202).

4. Système de surveillance de pièges ou de boîtiers à appât (101, 106, 116, 412) pour la lutte contre les nuisibles selon les revendications 1 à 3 via une communication radio sur un réseau de données, dans lequel le réseau de données est un réseau MESH : comprenant une unité centrale ("1", 501) et une première unité décentralisée ("2", 401) une deuxième unité décentralisée ("3", "4", 401), dans lequel :
les première et deuxième unités décentralisées sont configurées selon l'une quelconque des revendications 1 à 3 ; et
l'unité centrale ("1", 501) est configurée avec :
- un émetteur-récepteur radioélectrique (503) qui est compatible avec l'émetteur-récepteur radioélectrique (403) des unités décentralisées ("2", "3", "4", 401) ;
- une unité de commande centrale (507) recevant et / ou envoyant des rapports envoyés depuis ou vers des unités décentralisées respectives ("2", "3", "4", 401) via une connexion directe ou via une ou plusieurs stations intermédiaires ;
dans lequel l'unité de commande centrale (507) prend fin à un mode normal dans les unités décentralisées ("2", "3", "4", 401) par émission d'un signal de veille prédéterminé lorsqu'elle a reçu des rapports provenant de toutes les unités décentralisées enregistrées ou par une temporisation, si bien que toutes les unités décentralisées enregistrées sont synchronisées périodiquement avec le signal de veille émis centralement.

5. Système selon la revendication 4, dans lequel l'unité de commande centrale (507) maintient un registre d'unités ("1", "2", "3", "4", 401, 501) qui sont enregistrées ; et présente un mode d'enregistrement activable par l'utilisateur dans lequel elle attend un rapport envoyé à partir d'une unité décentralisée ("2", "3", "4", 401) qui n'est pas encore complètement enregistrée ;
dans lequel une unité décentralisée présente un mode d'enregistrement ;
dans lequel l'unité centrale (507) exécute un processus d'enregistrement qui peut être terminé avec succès ou défectueux dans la communication avec l'unité décentralisée qui a été mise dans un mode d'enregistrement (203) ; et
dans lequel l'unité décentralisée émet un signal vers un utilisateur avec une indication d'erreur ou de succès.

6. Procédé de surveillance de pièges ou de boîtiers à appât (106, 116, 412) pour la lutte contre les nuisibles via une communication radio sur un réseau de données, le réseau de données étant un réseau MESH ; dans lequel une unité centrale (507) est incluse et plusieurs unités décentralisées ("2", "3", "4", 401) installées dans des pièges ou boîtiers à appât respectifs (101, 106, 116, 412) pour la lutte contre les nuisibles dans le réseau de données, comprenant les étapes consistant à :
- enregistrer un événement dans un piège ou boîtier à appât (106, 116, 412) avec un capteur et générer un rapport qui contient des informations concernant l'événement ;
- synchroniser la désactivation périodique des unités décentralisées ("2", "3", "4", 401) avec l'effet qu'elles sont, approximativement simultanément, mises dans un mode de veille (202, 602) avec une consommation d'énergie relativement faible depuis un mode normal (201, 601) avec une consommation d'énergie relativement élevée ;
- mettre une unité décentralisée ("2", 401), dans le mode normal périodique (201, 601), pour agir en tant que répéteur pour des signaux provenant d'autres unités décentralisées ("3", "4", 401), et suspendre la fonction en tant que répéteur dans le mode de veille (202, 602) ;
exécuter une transmission diffusée du rapport provenant d'une unité décentralisée ("2", 401), la transmission diffusée étant exécutée pendant un intervalle de temps réservé, lorsque l'unité décentralisée est dans son mode normal (201, 601).

7. Procédé selon la revendication 6, comprenant les étapes consistant à
- démarrer un temporisateur (TIMER1) qui expire après un intervalle de temps prédéterminé ; et
- activer les unités décentralisées ("2", "3", "4", 401) pour qu'elles se réveillent en mode normal (201, 601) lorsque le temporisateur expire.

8. Procédé selon la revendication 7, comprenant ce que
- l'unité décentralisée ("2", "3", "4", 401) met fin au mode normal (201, 601) lorsqu'elle reçoit un signal de veille qui, à la réception, est utilisé pour redémarrer instantanément le temporisateur (TIMER1) et désactiver l'unité décentralisée pour la mettre dans le mode avec une consommation d'énergie relativement faible.

9. Procédé selon les revendications 7 à 8, dans lequel l'unité décentralisée ("2", "3", "4", 401) agit en tant que répéteur pendant la plupart du mode normal (201, 601), à l'exception d'un deuxième intervalle de temps réservé pour et / ou lorsque la transmission de diffusion est exécutée.

10. Procédé selon les revendications 7 à 9, comprenant
- la détermination de l'intervalle de temps réservé sur la base d'un code d'identité stocké dans l'unité décentralisée ("2", "3", "4", 401).

11. Procédé selon les revendications 7 à 10, comprenant
- la mise de l'unité centrale (507) dans un mode d'enregistrement dans lequel elle attend, en programmation, la réception de signaux de communication avec des codes d'identité respectifs provenant des unités décentralisées ("2", "3", "4", 401) ;
- la mise d'une unité décentralisée ("2", "3", "4", 401) dans un mode de liaison dans lequel elle, lors de l'activation physique d'un élément de commande, démarre la transmission d'un signal de communication avec un code d'identité ;
- la réception du signal de communication avec le code d'identité et l'enregistrement d'un élément dans une base de données correspondant au code d'identité ; et
- la transmission d'un signal de communication d'arrêt de l'unité centrale (507) aux unités décentralisées ("2", "3", "4", 401).
